# EUROPEAN PATENT APPLICATION

(11) **EP 4 790 875 A1**
(43) Date of publication of application: **12.08.2026**
(21) Application number: 25305176.7
(22) Date of filing: 06.02.2025
(51) Int. Cl.: H02K 1/20, H02K 1/32, H02K 15/0273

(54) **SHEET METAL ASSEMBLY FORMING A MOTOR ROTOR AND/OR STATOR**

(71) Applicant: ALSTOM Holdings, 93400 Saint-Ouen-sur-Seine (FR)
(72) Inventor: BROCARD, Laurent, 25290 SCEY-MAISIERES (FR); BOUALEM, Benali, 25660 SAONE (FR)
(74) Representative: Plasseraud IP

(57) **Abstract**

Sheet metal assembly (10) forming a motor rotor and/or stator (15) comprising at least two metal sheets (22, 22A, 22B), each metal sheet (22, 22A, 22B) comprising at least one through hole (30) in a stacking direction (S), each metal sheet (22, 22A, 22B) being stacked with the other metal sheets (22) in the stacking direction (S), each through hole (30) of each metal sheet (22, 22A, 22B) facing at least partially a through hole (30) of the other metal sheets (22, 22A, 22B) so as to form one or more air ducts (35) extending in the stacking direction (S). The metal sheets (22, 22A, 22B) are configured and arranged so that each air duct (35) comprises at least one shoulder (40) along the stacking direction (S).

## Description

The present invention concerns a sheet metal assembly of the type comprising at least two metal sheets, each metal sheet comprising at least one through hole in a stacking direction, each metal sheet being stacked with the other metal sheets in the stacking direction, each through hole of each metal sheet facing at least partially a through hole of the other metal sheets so as to form one or more air ducts extending in the stacking direction.

Electric motors are used in machines and processes all around us, in factories, automobiles, airplanes, or even robots. Regardless of the application, managing thermal dissipation is a common theme.

In most cases, heat dissipation of electric rotating machines (such as motors and alternators) is achieved through conductive cooling, for instance using a circulating fluid in a dedicated path, the fluid being a liquid and/or a gas allowing for thermal dissipation.

In particular, air-cooled motors, for instance traction motors in the automotive field, are cooled by a gas circulating through air ducts formed near the stator of the engine.

To this aim, it is known from the state of the art, to create a cooling circuit, generally in the form of tubes, cut from the metal sheets forming the stator.

The air circulating though the cooling circuit thus extracts the thermal losses generated in the magnetic and electrical circuits of the engine by the passage of current or magnetic flux.

However, the heat transfer between the cold air circulating in the air ducts and the hot metal sheet forming the stator is not optimal using this solution.

One aim of the invention is thus to provide a sheet metal assembly providing a more efficient air cooling system for a motor.

To this aim, the metal sheets of the sheet metal assembly according to the invention, are configured and arranged so that each air duct comprises at least one shoulder along the stacking direction.

The metal sheets being configured and arranged so that each air duct comprises at least one shoulder along the stacking direction, the air ducts thus have variable shape, direction and/or dimension, along the stacking direction, and a rugosity effect is created inside the air ducts.

The solution provides then asperities inside the air ducts, creating turbulences in the cooling air circulation pathway. Such turbulences increase the convective heat transfer between the cold air circulating in the air ducts and the hot metal sheet(s) forming the stator.

In the same time, the available surface of exchange for the heat transfer is significantly increased thanks to such a configuration of the metal sheets and/or of their stacking.

The sheet metal assembly according to the invention may comprise one or more of the following features, taken alone or in any technically allowable combination:
- Each metal sheet comprises a plurality of through holes, angularly distributed around a central axis of the metal sheet, so that a plurality of air ducts are formed by these through holes.
- The through holes of a first metal sheet all have same first dimensions, and the through holes of a second metal sheet all have same second dimensions, said first dimensions being different from said second dimensions.
- Each metal sheet is identical and, for each metal sheet, at least two through holes of the metal sheet have different dimensions.
- Each metal sheet comprises an alternating angular array of through holes having first dimensions, and through holes having second dimensions, the first dimensions being strictly greater than the second dimensions, each through hole of first dimensions of each metal sheet facing a through hole of second dimensions of at least one other metal sheet.
- For at least one duct, at least one of the through holes forming this duct has dimensions and/or a shape different than at least one another through hole forming this same duct.
- For at least one duct, at least one of the through holes forming this duct is angularly offset with respect to at least one another through hole forming this same duct.
- Each metal sheet comprises stator slots angularly distributed around a central axis of the metal sheet, each through hole being disposed around the stator slots, further away from the central axis.

In a second aspect, the invention concerns a motor comprising a stator and/or a rotor formed with a sheet metal assembly as described above.

In a third aspect, the invention concerns a method for manufacturing a sheet metal assembly as described above, the method comprising the steps of:
- facing the at least two metal sheets in the stacking direction so that each through hole of each metal sheet faces at least partially a through hole of the other metal sheets so as to form the one or more air ducts extending in the stacking direction,
- stacking the at least two metal sheets so that each air duct comprises the at least one shoulder along the stacking direction.

The invention will be better understood in the light of the following drawings, given by way of example only:
[Fig. 1] figure 1 is a cross-sectional view of a sheet metal assembly, taken along a transversal plane,
[Fig. 2] figure 2 is a perspective view of a part of the sheet metal assembly of figure 1,
[Fig. 3] figure 3 is a cross-sectional view, taken along the stacking direction, of an air duct of the sheet metal assembly of figure 1, according to a first embodiment,
[Fig. 4] figure 4 is a cross-sectional view, taken along the stacking direction, of an air duct of the sheet metal assembly of figure 1, according to a second embodiment, and
[Fig. 5] figure 5 is a cross-sectional view, taken along the stacking direction, of an air duct of the sheet metal assembly of figure 1, according to a third embodiment.

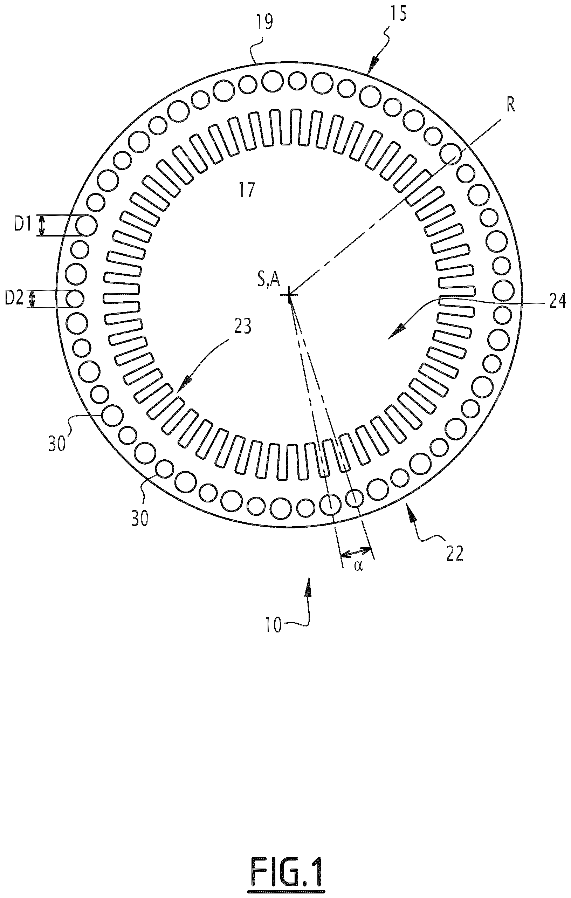

A part of a metal sheet assembly 10 according to the invention is illustrated on figure 1.

In a particular embodiment, the metal sheet assembly 10 is for instance intended to form a stator 15 and/or a rotor of a motor, not represented.

In the following, for clarity reasons, it will be considered that the metal sheet assembly 10 is intended to form the stator 15 of a motor. However, the concepts of this invention apply in an identical way to the rotor of a motor.

The motor is an air-cooled motor, for instance a traction motor intended to be used in a transport vehicle, such as a railway vehicle or an automobile vehicle.

The stator 15 extends around a shaft, not represented, along a central axis A.

The stator 15 comprises an internal stator surface 17 and an external stator surface 19, the external stator surface 19 being opposite the internal stator surface 17 according to a radial direction R perpendicular to the central axis A.

In a known manner, the stator 15 is the stationary part of the motor.

The metal sheet assembly 10 comprises at least two metal sheets 22, superimposed in a stacking direction S. On figure 1, only one metal sheet 22, according to a particular embodiment, is illustrated.

The stacking direction S is for example parallel to the central axis A.

Each metal sheet 22 has for example a polygonal outline, or a circular outline, as represented in figure 1. The radial direction R is then defined as a direction parallel to the radius of the metal sheet 22, passing though the central axis A.

Each metal sheet has for instance a thickness, taken along the stacking direction S, comprised between 0.2 mm and 1.0 mm.

For instance, the metal sheet assembly 10 comprises two, three, or more, metal sheets 22 superimposed in the stacking direction S, until forming the entire stator 15.

The stator 15 is then formed by a plurality of the metal sheets 22, laminated one onto the others, along the stacking direction S.

As illustrated on figure 1, each metal sheet 22 comprises stators 23 angularly distributed around the central axis A. In particular, the internal stator surface 17 defines the stator slots 23, extending towards the external stator surface 19 along the radial direction R.

The stator 15 defines an internal volume 24 of the motor, into which the rotor is received.

The rotor (not presented) extends around the shaft, and is free to rotate inside the stator 15. For instance, the rotor is set in rotation around the central axis A by the shaft.

The rotor transmits mechanical power and/or interacts with a magnetic field to produce motion or electrical power. The rotor comprises for instance a wire coil or a series of permanent magnets. In the latter case, cooling of the motor is extremely important, as the permanent magnets might be temperature sensitive.

The rotor comprises a plurality of rotor slots, complementary to the stator slots 23.

As it can be seen on figure 1, each metal sheet 22 comprises at least one through hole 30 in the stacking direction S.

By "through hole 30 in the stacking direction S", it is meant that each through hole 30 crosses the metal sheet 22 in its entire thickness, along the stacking direction S.

The through holes 30 may have a circular shape, an oblong shape, a rectangular shape, or a square shape. The through holes 30 may be all identical or different, in shape and/or in dimension.

Each through hole 30 has a transversal dimension comprised between 10 mm and 30 mm.

By "transversal dimension", it is meant a dimension perpendicular to the stacking direction S, characterizing the through hole 30.

In the example of figure 1, each metal sheet 22 comprises a plurality of through holes 30, angularly distributed around the central axis A.

In a specific example, each through hole 30 is disposed around the stator slots 23, further away from the central axis A.

In other words, the through holes 30 are located between the stator slots 23 and the external stator surface 19. The number of stator slots 23 is for instance a multiple of the number of through holes 30. In particular, the number of through holes 30 is an even number.

In this way, as illustrated on figure 1, one through hole 30 for instance faces two stator slots 23.

In another example, not shown, one through hole 30 faces exactly one stator slots 23, and the metal sheet 22 comprises the same number of through holes 30 and of stator slots 23.

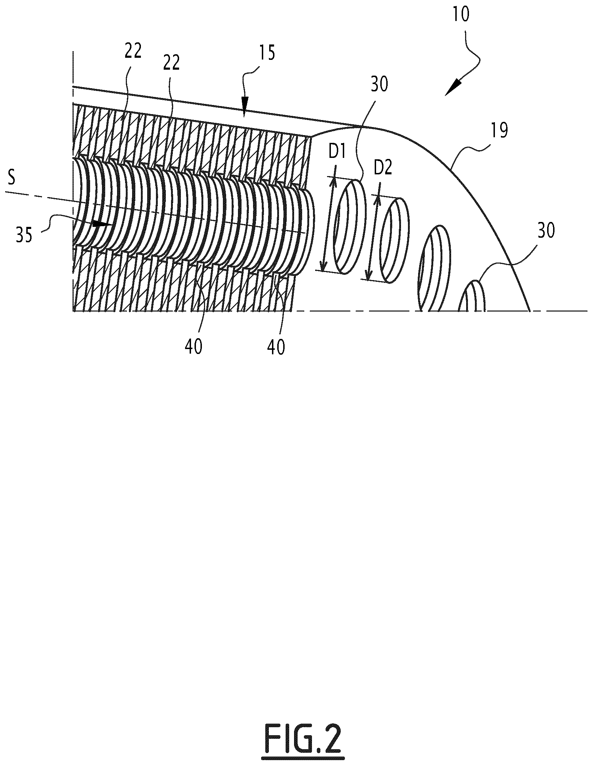

As it is illustrated in figures 2 to 5, each metal sheet 22 is stacked with the other metal sheets 22 in the stacking direction S so that each through hole 30 of each metal sheet 22 faces at least partially a through hole 30 of the other metal sheets 22 so as to form an air duct 35 extending in the stacking direction S.

In other words, the alignment of the through holes 30 of the different metal sheets 22 in the stacking direction S creates a channel, the air duct 35, configured for the circulation of cooling air in the stator 15. Each air duct 35 extends all along the metal sheet stack, so the air can circulate from one end to the other end of this stack.

According to the invention, the metal sheets 22 are configured and arranged so that each air duct 35 comprises at least one shoulder 40, along the stacking direction S.

In other words, the metal sheets 22 are configured and arranged so that each air duct 35 has a shape that varies along the stacking direction S.

By "a shape that varies along the stacking direction S", it is meant that the walls of the air ducts 35 are not smooth and rectilinear along the stacking direction S. At least one change of direction and/or transversal dimension occurs along the stacking direction S.

In a particular embodiment, it is meant by "each air duct 35 comprises at least one shoulder 40" that for each duct 35, at least one of the through holes 30 forming this duct 35 has dimensions and/or a shape different than at least one another through hole 30 forming this same duct 35.

In another particular embodiment, it is meant by "each air duct 35 comprises at least one shoulder 40" that for each duct 35, the center of at least one of the through holes 30 forming this duct 35 is angularly offset with respect to the center of at least one another through hole 30 forming this same duct 35. By "angularly offset" it is intended that said through hole center is not aligned with at least one other through hole center in the stacking direction S.

Each shoulder 40 may be located anywhere inside the air duct 35, along the stacking direction S, or may be located in a dedicated zone (e.g. the beginning, the middle, or the end of the air duct 35, taken in the stacking direction S).

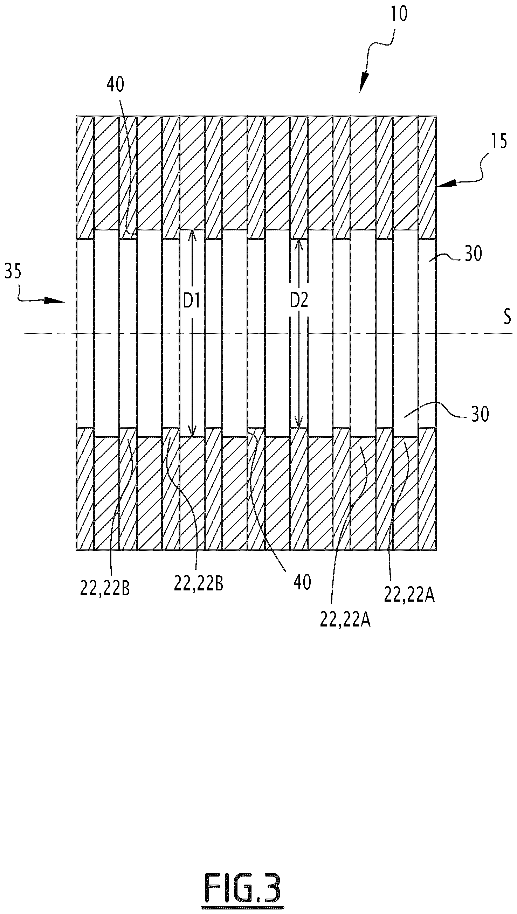

A first embodiment of the metal sheet assembly 10 will now be described in view of figures 2 and 3.

In this first embodiment, the metal sheet assembly 10 comprises one unique type of metal sheets 22.

In other word, each metal sheet 22 is identical and, for each metal sheet 22, at least two through holes 30 of the metal sheet 22 have different dimensions.

By "dimension", it is meant either the diameter for circular through holes 30, or a transverse dimension (a width, a length, a diagonal) for rectangular or square through holes 30.

For instance, as illustrated on figure 2, each metal sheet 22 comprises an alternating angular array of through holes 30 having first dimensions D1, and through holes 30 having second dimensions D2, the first dimensions D1 being strictly greater than the second dimensions D2.

In this example, each through hole 30 of first dimensions D1 of each metal sheet 22 faces a through hole 30 of second dimensions D2 of at least one other metal sheet 22.

In other words, each metal sheet 22 is stacked with the other metal sheets 22 with an angular offset ±α, represented on figure 1.

When the metal sheet 22 comprises an alternating angular array of through holes 30 having first dimensions D1, and through holes 30 having second dimensions D2, the angular offset α is for instance equal to 360° divided by the total number of slots 23 in a same metal sheet 22.

For instance, each metal sheet 22 is angularly offset with the angle +α from the metal sheet 22 onto which it is superimposed, or one metal sheet 22 is superimposed on a metal sheet 22 with an angle +α and the next metal sheet 22 is superimposed on a metal sheet 22 with an angle -α, and so on until the air duct 35 is formed.

In another example, each metal sheet 22 is angularly offset with an angle equal to a multiple of the angle +α from the metal sheet 22 onto which it is superimposed.

In a variant, several metal sheets 22 are superimposed with a zero angle offset, the through holes 30 having first dimensions D1 facing each others, until a metal sheet 22 is superimposed with the angular offset ±α, a through hole 30 having second dimensions D2 thus facing the previous first dimensions through holes 30.

The person skilled in the art understands that any arrangement of the metal sheets 22 and their stacking, suitable for creating at least one shoulder 40 in the air duct 35, is supported by the present invention.

Therefore, through each metal sheet 22 superimposition, the air ducts 35 formed by the through holes 30 has a variable transversal dimension, corresponding to an alternating array of through holes 30 of first dimensions D1 and of through holes 30 of second dimensions D2.

In a variant of this first embodiment, which leads to the same graphical representation as in figure 3, the metal sheet assembly 10 comprises two different types of metal sheets 22. In particular, the metal sheet assembly 10 comprises a first set of metal sheets 22A having a first configuration, and a second set of second metal sheets 22B having a second configuration, the second configuration being different than the first configuration.

Each metal sheet 22A, 22B have the same number of stator slots 23 and of through holes 30.

In the example of figure 3, the thickness, taken along the stacking direction S, of the first metal sheet 22A is equal to the thickness, taken along the stacking direction S, of the second metal sheet 22B.

In particular, the through holes 30 of a first metal sheet 22A all have same first dimensions D1, and the through holes 30 of a second metal sheet 22B all have same second dimensions D2, said first dimensions D1 being different from said second dimensions D2.

For instance, the metal sheet assembly 10 then comprises an alternative array of superimposed first metal sheet 22A with second metal sheet 22B, as illustrated on figure 3.

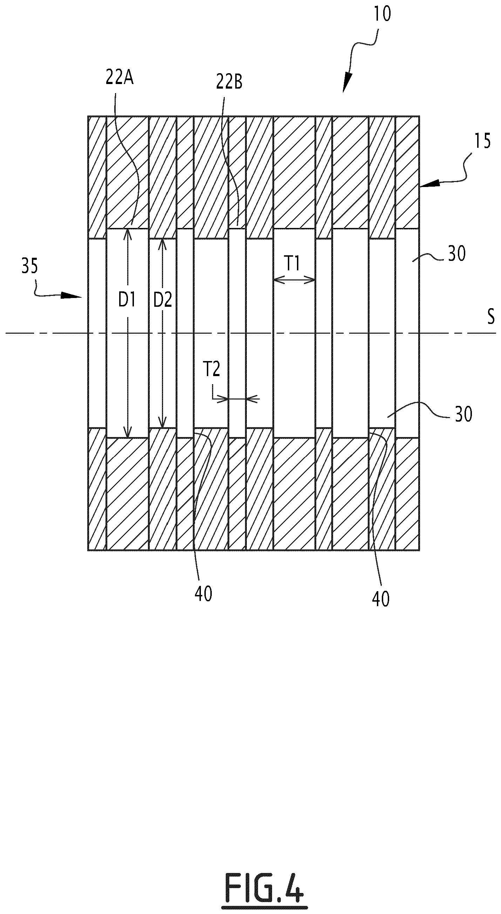

In the example of figure 4, the thickness T1, taken along the stacking direction S, of the first metal sheet 22A differs from the thickness T2, taken along the stacking direction S, of the second metal sheet 22B.

In a variant of this example, the thickness, taken along the stacking direction S, of the first metal sheet 22A is equal to the thickness, taken along the stacking direction S, of the second metal sheet 22B. However, the metal sheets 22 are superimposed in such a way that a first set of first metal sheets 22A is superimposed with a second set of second metal sheets 22B, the number of first metal sheets 22A in the first set is different from the number of second metal sheets 22B in the second set.

Independently of the variants presented above, with such a configuration of the metal sheets 22 and/or of their stacking, each created air duct 35 is able to create turbulences for the air circulating inside it.

For a same air throughput, the turbulences increase the heat transfer between the air in circulation in the air ducts 35 and the metal sheet 22.

Furthermore, the shoulders 40 created by the configuration of the metal sheets 22 and/or their stacking, increases the surface of exchange between the circulating air in the air ducts 35 and the metal sheet 22, and favors the thermal dissipation.

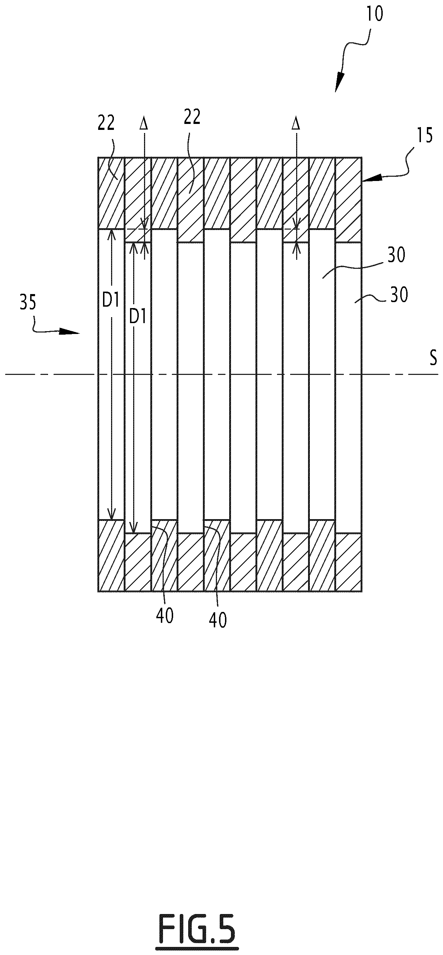

A second embodiment will now be described in view of figure 5.

In this embodiment, the metal sheet assembly 10 is similar to the one of the first embodiment. Only the distinguishing features will be described below in details. The similar features will bear the same number of reference.

The invention covers any technically allowable combination of the two embodiments.

In this second embodiment, each metal sheet 22 is for instance identical and every through holes 30 have the same dimension D1.

In this embodiment, each metal sheet 22 is stacked with the other metal sheets 22 with an angular offset ±β, not represented.

For instance, as illustrated on figure 5, each metal sheet 22 is angularly offset with the angle + β from the metal sheet 22 onto which it is superimposed, or one metal sheet 22 is superimposed on a metal sheet 22 with an angle + β and the next metal sheet 22 is superimposed on a metal sheet 22 with an angle - β, and so on until the air duct 35 is formed.

The angle β is chosen in such a way as to create a duct misalignment Δ, illustrated on figure 5. Besides, the angle β is chosen in such a way as to always have at least part of one through hole 30 facing at least a part of another though hole 30, so as not to obstruct the air duct 35.

The duct misalignment Δ, taken perpendicularly to the stacking direction S, generates the shoulders 40 in the air ducts 35.

For example, for a first dimension D1 comprised between 10 mm and 30 mm, the angle β is restricted by the number of stator slots 23, and the duct misalignment Δ is comprised between 0,5 mm and 2 mm.

In a variant of such embodiment, not illustrated, each metal sheet 22 is angularly offset with a variable angle from the metal sheet 22 onto which it is superimposed. For at least one metal sheet 22, the variable angle is different than zero.

In a last example, not illustrated, at least one of the through holes 30 forming an air duct 35 has a different shape than at least one another through hole 30 forming this same duct 35.

The invention also concerns a method for manufacturing such a sheet metal assembly 10.

Initially, at least two metal sheets 22 are provided.

The at least two metal sheets 22 are either identical or different.

The method comprises the step of facing the at least two metal sheets 22 in the stacking direction S. During this step, the metal sheets 22 are faced so that each through hole 30 of each metal sheet 22 faces at least partially a through hole 30 of the other metal sheets 22.

Therefore, at this first step, one or more air ducts 35 extending in the stacking direction S are created in the metal sheet assembly 10.

The method then comprises the step of stacking the at least two metal sheets 22 so that each air duct 35 comprises at least one shoulder 40 along the stacking direction S.

As previously mentioned, this second step may be obtained by using same or different metal sheets 22, with same or different through holes 30 dimensions and shape, and/or with an angular offset between two through holes 30 facing each other along the stacking direction S.

The metal sheets 22 are then for instance assembled by welding or by any other suitable type of bonding.

The sheet metal assembly 10 according to the invention features many advantages.

The configuration of the metal sheets 22 and/or of the stacking of the metal sheets 22 allows obtaining air ducts 35 with variable shape and/or orientation and/or dimension along the stacking direction S.

Such a feature increases the rugosity effect inside the air ducts 35, as the walls of the air ducts are thus not smooth, and generates turbulences for the air in circulation inside the air ducts 35.

With the presence of turbulences, the convective heat transfer is increased between the cold air circulating in the air ducts 35 and the hot metal sheet 22.

In the same time, the available surface of exchange for the heat transfer is significantly increased.

All of those consequences finally lead to an increased air cooling of the stator and/or rotor.

The metal sheet assembly 10 according to the invention thus provides an efficient cooling for the motor, which increases motor performances while providing a good motor compactness.

## Claims

1. Sheet metal assembly (10) forming a motor rotor and/or stator (15) comprising at least two metal sheets (22, 22A, 22B), each metal sheet (22, 22A, 22B) comprising at least one through hole (30) in a stacking direction (S), each metal sheet (22, 22A, 22B) being stacked with the other metal sheets (22) in the stacking direction (S), each through hole (30) of each metal sheet (22, 22A, 22B) facing at least partially a through hole (30) of the other metal sheets (22, 22A, 22B) so as to form one or more air ducts (35) extending in the stacking direction (S),
**characterized in that** the metal sheets (22, 22A, 22B) are configured and arranged so that each air duct (35) comprises at least one shoulder (40) along the stacking direction (S).

2. Sheet metal assembly (10) according to claim 1, wherein each metal sheet (22, 22A, 22B) comprises a plurality of through holes (30), angularly distributed around a central axis (A) of the metal sheet (22, 22A, 22B), so that a plurality of air ducts (35) are formed by these through holes (30).

3. Sheet metal assembly (10) according to claim 2, wherein, the through holes (30) of a first metal sheet (22A) all have same first dimensions (D1), and the through holes (30) of a second metal sheet (22B) all have same second dimensions (D2), said first dimensions (D1) being different from said second dimensions (D2).

4. Sheet metal assembly (10) according to claim 2, wherein each metal sheet (22) is identical and, for each metal sheet (22), at least two through holes (30) of the metal sheet (22) have different dimensions (D1, D2).

5. Sheet metal assembly (10) according to claim 4, wherein each metal sheet (22) comprises an alternating angular array of through holes (30) having first dimensions (D1), and through holes (30) having second dimensions (D2), the first dimensions (D1) being strictly greater than the second dimensions (D2), each through hole (30) of first dimensions (D1) of each metal sheet (22) facing a through hole (30) of second dimensions (D2) of at least one other metal sheet (22).

6. Sheet metal assembly (10) according to any one of the preceding claims, wherein, for at least one duct (35), at least one of the through holes (30) forming this duct (35) has dimensions (D1, D2) and/or a shape different than at least one another through hole (30) forming this same duct (35).

7. Sheet metal assembly (10) according to any one of the preceding claims wherein for at least one duct (35), at least one of the through holes (30) forming this duct (35) is angularly offset with respect to at least one another through hole (30) forming this same duct (35).

8. Sheet metal assembly (10) according to any one of the preceding claims, wherein each metal sheet (22, 22A, 22B) comprises stator slots (23) angularly distributed around a central axis (A) of the metal sheet (22, 22A, 22B), each through hole (30) being disposed around the stator slots (23), further away from the central axis (A).

9. Motor comprising a stator (15) and/or a rotor formed with a sheet metal assembly (10) according to any one of the preceding claims.

10. Method for manufacturing a sheet metal assembly (10) according to any one of claims 1 to 8, the method comprising the steps of:
- facing the at least two metal sheets (22, 22A, 22B) in the stacking direction (S) so that each through hole (30) of each metal sheet (22, 22A, 22B) faces at least partially a through hole (30) of the other metal sheets (22, 22A, 22B) so as to form the one or more air ducts (35) extending in the stacking direction (S),
- stacking the at least two metal sheets (22, 22A, 22B) so that each air duct (35) comprises the at least one shoulder (40) along the stacking direction (S).
